## Europäisches Patentamt
## European Patent Office
## Office européen des brevets

(19)

(11) Numéro de publication: **0 057 619**
**A1**

(12)

# DEMANDE DE BREVET EUROPEEN

(21) Numéro de dépôt: **82400027.7**

(22) Date de dépôt: **08.01.82**

(51) Int. Cl.³: **C 04 B 21/00**

(30) Priorité: **09.01.81  FR 8100589**

(71) Demandeur: **CARRIERES DES LACS, Saint-Aubin-des-Landes, F-35500 Vitré (FR)**

(43) Date de publication de la demande: **11.08.82 Bulletin 82/32**

(72) Inventeur: **Hériau, Roger, Saint-Aubin-des-Landes, F-35500 Vitré (FR)**

(84) Etats contractants désignés: **AT BE CH DE FR GB IT LI LU NL SE**

(74) Mandataire: **Schrimpf, Robert et al, Cabinet Regimbeau 26, Avenue Kléber, F-75116 Paris (FR)**

(54) Bloc de construction porteur et isolant et procédé pour le fabriquer.

(57) L'invention concerne un bloc porteur et isolant.

Ce bloc est en schiste d'ardoise expansé. On peut le fabriquer en remplissant un moule (5) avec une poudre sèche constituée au moins en majeure partie d'un schiste d'ardoise précambrien (1) de granulométrie comprise dans la gamme 5–200 microns (2), le chauffage (6) de cette poudre dans le moule à une température de la gamme 1000–1400 °C pendant une durée d'au moins 1 à 6 heures, le refroidissement (7) du bloc dans le moule après expansion et le démoulage (8) du bloc.

Ce bloc est utilisable comme bloc de construction.

EP 0 057 619 A1

Bloc de construction porteur et isolant et procédé pour le fabriquer.

L'invention concerne un bloc de construction et un procédé pour le fabriquer.

On connaît des blocs de construction en agglomérés de mortier ou de béton, communément appelés "parpaings" qui sont porteurs, c'est-à-dire qui peuvent être empilés pour constituer des cloisons et des murs et qui peuvent même supporter une charpente et une couverture, mais ces blocs, qui sont avantageusement homogènes et venus de moulage, sont généralement des isolants médiocres notamment du point de vue thermique.

On connaît, d'autre part, des panneaux isolants venus de moulage en mousse de matière plastique qui ne peuvent être utilisés comme blocs porteurs en construction en raison d'une résistance mécanique insuffisante, mais qui peuvent être associés à des blocs de construction pour constituer des ensembles composites à la fois porteurs et isolants.

On connaît aussi l'association, au stade de la formation du bloc, d'un parpaing et d'un panneau isolant constituant ensemble un bloc hétérogène comprenant des parties porteuses et des parties isolantes.

On connaît également la dispersion dans la matière du bloc de billes ou autres particules susceptibles de conférer au bloc des qualités d'isolation, obtenant ainsi un bloc hétérogène mais dont l'hétérogénéité est répartie de façon homogène.

On connaît enfin des blocs de construction en argile durcie qui présentent l'inconvénient d'avoir une reprise d'eau importante gênante pour l'utilisation de ces blocs comme matériau de construction isolant.

La présente invention a pour objet un bloc de construction venu de moulage, en matériau homogène, porteur,isolant et à reprise d'eau négligeable.

Le bloc de l'invention est en schiste d'ardoise expansé.

On a découvert en effet que l'expansion dans un moule d'un schiste d'ardoise, notamment d'époque précambrien, fournit un bloc homogène, de faible densité (généralement comprise dans la gamme 300 à 700 kg/m3) offrant des propriétés d'isolation comparables à celles des mousses de matière plastique, suffisamment résistant à l'écrasement pour être porteur et à reprise d'eau quasi nulle.

Un procédé typique pour fabriquer un tel matériau comporte le remplissage ou le quasi remplissage d'un moule avec une poudre sèche constituée, au moins en majeure partie, d'un schiste d'ardoise précambrien de granulométrie comprise dans la gamme 5-200 microns, de préférence

0057619

30-70 microns, le chauffage de cette poudre dans le moule à une température comprise dans la gamme 1000-1400°C, de préférence 1100-1300°C pendant une durée d'au moins 1 à 6 heures, et le refroidissement du bloc après expansion de la poudre.

Si on le désire, on préchauffe le moule à une température de ladite gamme avant l'introduction de la poudre dans le moule.

On décrira ci-après, à titre indicatif, un exemple de mise en oeuvre du procédé de l'invention pour obtenir un bloc conforme à l'invention.

De préférence, on utilise comme poudre de schiste d'ardoise précambrien les fines obtenues comme résidus dans l'exploitation d'une carrière de tel schiste.

Si nécessaire, on soumet ces fines à un broyage pour obtenir la granulométrie désirée.

La granulométrie désirée est normalement de la gamme 5-200 microns, de préférence 30-70 microns, mais il n'est pas exclu que la poudre contienne une partie mineure de granulométrie extérieure à cette gamme et comprise plus généralement dans la gamme de 0 à 500 microns.

Pour éviter un retrait du produit moulé dans le moule, il est préconisé d'incorporer à la poudre, en mélange intime, un agent approprié et l'on a découvert que le schiste d'ardoise ordovicien convient à cet effet, ce qui est tout à fait avantageux puisque ce schiste ou "schiste noir", se trouve généralement également dans les gisements de schiste précambrien.

On conseille d'utiliser de 20 à 40%, de préférence 25 à 35% de schiste d'ardoise ordovicien par rapport au volume total de la poudre.

En variante, on utilise d'autres agents comme par exemple le carbonate de calcium.

Une proportion de 1 à 5% en poids de carbonate de calcium par rapport au poids de la poudre convient généralement.

Il est à noter que le schiste précambrien est, par nature, beaucoup plus expansible que le schiste ordovicien.

Une composition typique de schiste précambrien est la suivante qui résulte d'une analyse effectuée après désagrégation au carbonate de sodium.

| | | |
|---|---|---|
| Perte au feu (dont anhydride carbonique(0,1) | : | 4,85 |
| Silice | : | 61,60 |
| Oxyde de fer | : | 5,20 |
| Alumine | : | 21,40 |
| Chaux | : | 0,00 |
| Anhydride sulfurique | : | 0,20 |
| Magnésie | : | 1,95 |
| Alcalins (en $K_2O$) | : | 4,65 |

La poudre est dosée en fonction du volume du moule de façon à occuper la totalité ou la quasi totalité du volume du moule.

On effectue le remplissage après avoir chauffé le moule à la température désirée soit typiquement une température aux environs de 1 250°C.

Le remplissage entraîne une diminution insignifiante de la température du moule et l'on continue le chauffage pendant généralement plusieurs heures jusqu'à obtenir l'expansion désirée de la matière dans le moule. Le moule est ensuite refroidi progressivement avec prudence pour éviter des fissurations du bloc pendant une durée de 6 à 20 heures, de préférence de 10 à 12 heures. Un couloir à refroidissement progressif ou des chambres successives à températures décroissantes est conseillé.

Le bloc obtenu après démoulage est immédiatement utilisable comme matériau de construction et/ou d'isolation.

La densité du bloc varie selon les cas. On donne la préférence à celles comprises dans la gamme 400-500 kg/m3.

Selon la forme du moule, il se présente généralement sous la forme d'un bloc ou d'un panneau et il peut être façonné par sciage.

Pour certaines applications, il peut être utile de broyer le matériau obtenu et d'utiliser la poudre ainsi obtenue.

Le bloc obtenu, quand il est utilisé comme matériau de construction, présente sur les agglomérés et autres blocs de construction usuels, l'avantage d'avoir une reprise d'eau insignifiante et des qualités d'isolation remarquable. Sa résistance à l'écrasement est suffisante pour qu'il puisse constituer des murs porteurs.

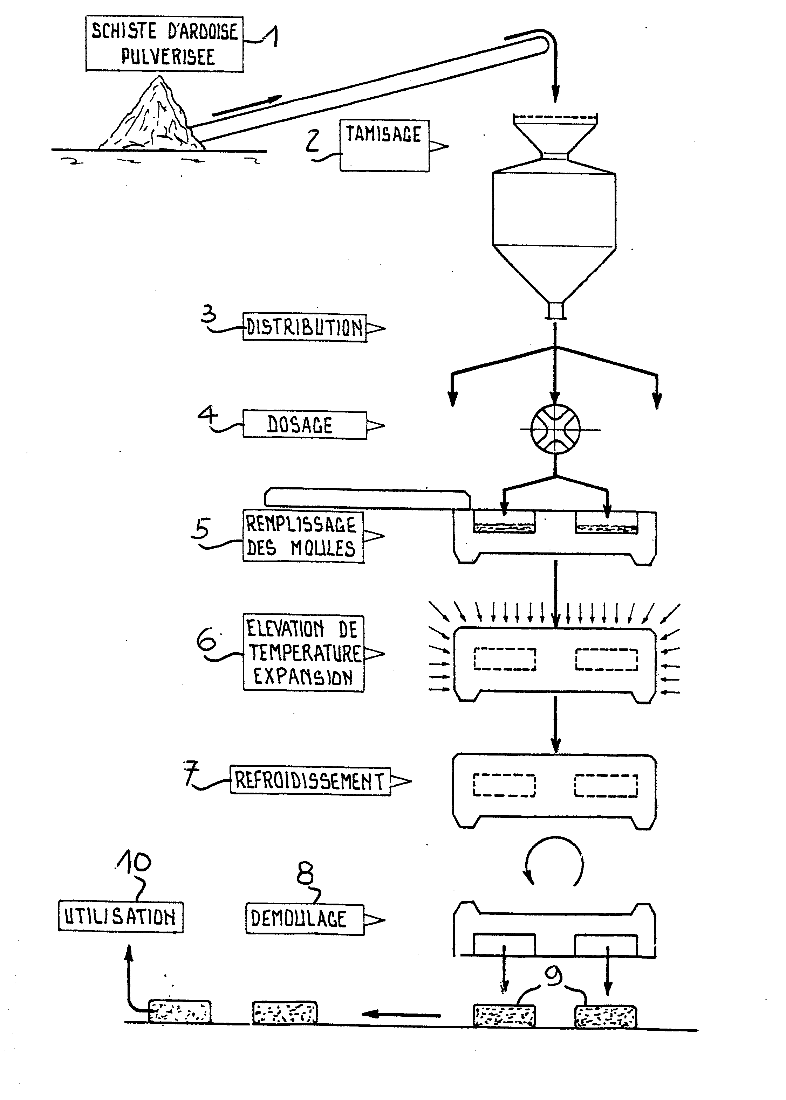

La figure unique du dessin joint est un schéma synoptique du procédé.

Sur cette figure, les références ont les significations suivantes.

- (1) : schiste d'ardoise pulvérisé en vrac,
- (2) : tamisage,
- (3) : distribution de la poudre de schiste,
- (4) : dosage de la poudre de schiste,
- (5) : remplissage des moules,
- (6) : chauffage des moules,
- (7) : refroidissement des moules,
- (8) : démoulage des blocs (9) en vue de leur utilisation (10).

Un avantage de l'invention est que la matière de départ peut s'expanser sans nécessiter une addition d'un agent extérieur. Cependant, il n'est pas exclu, si on le désire, d'ajouter à cette matière un ou plusieurs agents extérieurs et, par exemple, un plastifiant bien que ceci ne soit pas conseillé à priori.

0057619

## REVENDICATIONS

1.      A titre de produit industriel nouveau, un bloc (9) de construction, homogène, moulé, porteur et isolant, à reprise d'eau insignifiante, en schiste d'ardoise expansé.

2.      Procédé pour fabriquer un bloc selon la revendication 1, caractérisé en ce qu'il comporte le remplissage ou le quasi remplissage (5) d'un moule avec une poudre sèche (1) constituée, au moins en majeure partie, d'un schiste d'ardoise précambrien de granulométrie comprise dans la gamme 5-200 microns, de préférence 30-70 microns, le chauffage (6) de cette poudre dans le moule à une température comprise dans la gamme 1000-1400°C, de préférence 1100-1300°C pendant une durée d'au moins 1 à 6 heures, et le refroidissement (7) du bloc après expansion de la poudre.

3.      Procédé selon la revendication 2, caractérisé en ce qu'on utilise comme poudre de schiste d'ardoise les fines obtenues comme résidus dans l'exploitation d'une carrière de schiste d'ardoise, éventuellement après broyage des résidus.

4.      Procédé selon l'une des revendications 2 et 3, caractérisé en ce que ladite poudre sèche contient un agent apte à éviter un retrait dans le moule du produit moulé.

5.      Procédé selon la revendication 4, caractérisé en ce que cet agent est une poudre de schiste d'ardoise ordovicien.

0057619

6.      Procédé selon la revendication 5, caractérisé en ce que la proportion en volume de schiste d'ardoise ordovicien est comprise dans la gamme de 20 à 40%, de préférence 25 à 35% du volume total de la poudre.

7.      Procédé selon la revendication 4, caractérisé en ce que ledit agent est du carbonate de calcium.

8.      Procédé selon la revendication 7, caractérisé en ce que le carbonate de calcium est présent à raison de 1 à 5% en poids du poids de la poudre de schiste précambrien.

9.      Procédé selon l'une des revendications 2 à 8, caractérisé en ce qu'il comporte le préchauffage du moule avant l'introduction de la poudre à une température de ladite gamme.

10.  .   Procédé selon l'une des revendications 2 à 9, caractérisé en ce que le bloc est refroidi progressivement en 6 à 20 heures, de préférence en 10 à 12 heures.

11.      Procédé selon l'une des revendications 2 à 10, caractérisé en ce qu'il comporte une opération de broyage du bloc moulé.

12.      Le bloc obtenu par un procédé selon l'une des revendications 2 à 10.

13. La poudre obtenue par un procédé selon la revendication 11.

0057619

SCHISTE D'ARDOISE PULVERISEE — 1

2 — TAMISAGE

3 — DISTRIBUTION

4 — DOSAGE

5 — REMPLISSAGE DES MOULES

6 — ELEVATION DE TEMPERATURE EXPANSION

7 — REFROIDISSEMENT

10 — UTILISATION

8 — DEMOULAGE

9

0057619

**Office européen**
**des brevets**

**RAPPORT DE RECHERCHE EUROPEENNE**

Numéro de la demande

EP 82 40 0027

| | **DOCUMENTS CONSIDERES COMME PERTINENTS** | | **CLASSEMENT DE LA DEMANDE (Int. Cl. ³)** |
|---|---|---|---|
| Catégorie | Citation du document avec indication, en cas de besoin, des parties pertinentes | Revendication concernée | |
| Y | FR - A - 2 015 796 (GRUNZWEIG & HARTMANN) <br> * Revendications 1-4 * | 1-3,11 | C 04 B 21/00 |
| Y | FR - A - 2 134 843 (SATO OSAMU) <br> * Revendications 1-3,7-9, 10; page 4, ligne 7 * | 1-3 | |
| Y | CA - A - 986 288 (CLAYBURN IND) <br> * Revendications 1-6 * | 1-3 | **DOMAINES TECHNIQUES RECHERCHES (Int. Cl. ³)** <br><br> C 04 B |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications | | |
|---|---|---|---|
| **Lieu de la recherche** <br> La Haye | **Date d'achèvement de la recherche** <br> 01-04-1982 | **Examinateur** <br> STANGE | |

OEB Form 1503.1 06.78